# EUROPÄISCHE PATENTSCHRIFT

(11) **EP 3 134 312 B1**
(45) Veröffentlichungstag und Bekanntmachung des Hinweises auf die Patenterteilung: **15.11.2023**
(21) Anmeldenummer: 15714225.8
(22) Anmeldetag: 07.04.2015
(51) Int. Cl.: B63B 1/28, B63H 20/06, B63H 20/10, B63B 1/26

(54) **WASSERFAHRZEUG MIT BEWEGLICHEN TRAGFLÜGEL**
WATERCRAFT HAVING MOVABLE HYDROFOILS
VÉHICULE MARIN À AILES PORTANTES MOBILES

(30) Priorität: 25.04.2014 DE 102014105883
(43) Veröffentlichungstag der Anmeldung: 01.03.2017
(73) Patentinhaber: Schnauffer, Peter, 75038 Oberderdingen (DE)
(72) Erfinder: Schnauffer, Peter, 75038 Oberderdingen (DE)
(74) Vertreter: Herrmann, Jochen
(86) Internationale Anmeldenummer: PCT/EP2015/057473
(87) Internationale Veröffentlichungsnummer: WO 2015/162000

(56) Entgegenhaltungen:
- FR-A1- 2 464 176
- US-A- 2 984 197
- US-A- 3 150 626
- US-A- 3 236 202
- US-A- 3 354 857
- US-A- 3 456 611
- US-A- 5 117 776
- US-A- 5 329 870

## Beschreibung

Die Erfindung betrifft ein Wasserfahrzeug mit einem Bootskörper, der im Bereich des Hecks und des Bugs jeweils eine Tragflügelanordnung aufweist, wobei die Tragflügelanordnungen Tragflügel aufweisen, die beidseitig des Bootskörpers angeordnet sind.

Derartige Wasserfahrzeuge sind aus dem Stand der Technik auch als Tragflügel- oder Tragflächenboote bekannt. Mittels zumindest teilweise unter der Wasseroberfläche liegender Tragflügel werden sie bei zunehmender Geschwindigkeit während der Fahrt angehoben. Im Wassersportbereich werden die Tragflügel meist starr ausgelegt, d.h. die natürliche Verformung wird minimiert oder auf ein geringes Maß eingeschränkt. Dabei wird bei Auslegungsberechnungen von einer verformten Geometrie ausgegangen, anhand derer die Optimierung der Tragflügel vorgenommen wird. Das Ergebnis ist ein als starr oder steif zu bezeichnender Tragflügel.

Um die Wasserlage eines Tragflügelbootes zu stabilisieren ist es zweckmäßig, starre Tragflügel mit beweglichen Elementen zu versehen. Eine solche Tragflügelanordnung ist in der WO 2011/075053 A1 angegeben. Hierbei sind nicht-durchstoßende Tragflügel über schwenkbare Stützen mit einem Tragflügelboot verbunden. Im Falle einer Störung des Rollwinkels, die in einer transversalen Bewegung des Tragflügelbootes gegenüber der Wasserfläche resultiert, schwenken die Stützen gegenüber dem Tragflügelboot. Auf diese Weise wird die Auftriebskraft der Tragflügel transversal derart verschoben, dass sie einer transversalen Bewegung des Tragflügelbootes entgegensteuert und so das Tragflügelboot stabilisiert. Zu diesem Zweck kann zudem der Tragflügel verstellbare Elemente aufweisen. Die beschriebenen Maßnahmen beziehen sich jedoch lediglich auf die transversale Stabilisierung eines Tragflügelbootes mit nicht-durchstoßenden Tragflügeln. Weitere Wasserfahrzeuge sind in der US 5 329 870 A und in der US 3 456 611 A offenbart.

Der Erfindung liegt die Aufgabe zugrunde, ein vielseitig einsetzbares Wasserfahrzeug der eingangs genannten Art bereitzustellen, wobei eine stabile Wasserlage bei gleichzeitig hoher Fahrdynamik unter unterschiedlichen Verhältnissen erreicht wird. Diese Aufgabe wird mit den Merkmalen des Anspruches 1 gelöst. Dabei ist vorgesehen, dass die Tragflügelanordnungen an wenigstens eine Verstelleinheit derart angekoppelt sind, dass die bugseitige Tragflügelanordnung und die heckseitige Tragflügelanordnung zumindest teilweise jeweils individuell höhenverstellbar sind.

Durch die Höhenverstellung lässt sich ein Wasserfahrzeug von einem Gleiter, bei vollständig eingefahrenen Tragflügelanordnungen, in ein Tragflächenfahrzeug bei ausgefahrenen Tragflügelanordnungen umwandeln. Dabei ist die Höhenverstellung in Ruhe oder während der Fahrt vornehmbar, so dass die Fahrthöhe des Wasserfahrzeuges jederzeit den Verhältnissen entsprechend auf verschiedene Betriebs- und Belastungszustände eingestellt werden kann. So kann eine Anpassung beispielsweise bei langsamer oder schneller Fahrt auf ruhiger oder rauer See erfolgen. Die zumindest teilweise individuelle Höhenverstellung erlaubt eine flexible Einstellung des für den jeweiligen Fahrzustand benötigten Momenten- und Krafthaushaltes. Ein kompletter Einzug der Tragflügelanordnung ermöglicht ein platzoptimiertes Verstauen z.B. auf einem Anhänger und vereinfacht eine Anlandung des Wasserfahrzeuges an flachen Stränden oder eine Langsamüberfahrt auf seichtem Gelände.

Die bugseitigen und/oder heckseitigen Tragflügel sind jeweils individuell höhenverstellbar. Hierbei kann es zudem vorgesehen sein, den Anstellwinkel der Tragflügel zu beeinflussen. So kann beispielsweise eine Trimmung (longitudinal und/oder lateral) des Wasserfahrzeuges vorgenommen, die Kurvenfahrt verbessert und/oder fahrdynamische Eigenschaften erhöht oder auch gemindert werden.

Für eine einfache und individuelle Bedienbarkeit ist es von Vorteil, dass jedem Tragflügel eine Verstelleinheit mit einem Antrieb für die Höhenverstellung zugeordnet ist.

Dabei ist es für eine aufwandsoptimierte und auf den Bootskörper angepasste Höhenverstellung zweckmäßig, dass die Verstelleinheiten der bug- und/oder der heckseitigen Tragflügel oder der Tragflügelanordnungen über einen Hebelmechanismus an den Bootskörper angeschlossen sind.

Eine einfache Verstellung lässt sich dadurch erreichen, dass der Hebelmechanismus ein Viergelenksystem und/oder ein Schienensystem ist.

Vorteilhaft wirkt sich aus, dass dem Bootskörper ein Bootsantrieb mit einer Schubeinheit, insbesondere einer Schiffschraube oder einem Strahlantrieb zugeordnet ist, dass der Bootsantrieb oder zumindest ein Teil des Bootsantriebs höhenverstellbar an den Bootskörper angeschlossen ist, und dass eine Stelleinheit mit den Verstelleinheiten der Tragflügel und/oder Tragflügelanordnung synchronisiert ist. Über die Höhenverstellbarkeit zumindest eines Teils des Bootsantriebs kann zum einen gewährleistet werden, dass die maximale Eintauchtiefe des Bootsantriebs nicht überschritten wird. Zum anderen erlaubt sie, einen ausgeglichenen Momentenhaushalt und so eine stabile Lage des Bootskörpers während unterschiedlicher Betriebs- und Belastungszustände wie beispielsweise Start, Beschleunigung, Reise und Verzögerung zu erreichen. Da das Momentengleichgewicht zudem beeinflusst wird durch die hydrodynamischen Kräfte der Tragflügelanordnungen und Tragflügel, ist es zweckmäßig, eine Stelleinheit für die Verstellung des Bootsantriebs mit den Verstelleinheiten der Tragflügel und/oder mindestens einer Tragflügelanordnung zu synchronisieren. Synchronisieren bedeutet in diesem Zusammenhang, dass auf diese Weise die Verstellung des Bootsantriebs und der Tragflügelanordnungen und/oder der Tragflügel gekoppelt wird. Dies kann sich auf Höhen bzw. Verstellwege der betreffenden Elemente beziehen, wobei die Kopplung gegen- oder mitläufig erfolgen kann. So kann beispielsweise bei einer Höhenverstellung der hinteren Tragflügelanordnung um einen Verstellweg x automatisiert eine Höhenverstellung des Bootsantriebs um Ix veranlasst werden, wobei I einen Proportionalitätsfaktor darstellt.

Daneben kann vorteilhaft vorgesehen sein, dass die Stelleinheit derart ausgestaltet ist, dass sowohl die Höhenzuordnung der Schubeinheit zum Bootskörper als auch die Winkellage der Schubeinheit einstellbar ist. Eine Änderung der Winkellage der Schubeinheit beeinflusst ebenfalls das Momentengleichgewicht. Daher ist eine zweckmäßige Variante, auch die Winkellage der Schubeinheit an eine Verstellung der Tragflügelanordnungen und/oder der Tragflügel zumindest teilweise zu koppeln. Die Höhenzuordnung und die Winkellage der Schubeinheit können ebenfalls gekoppelt sein, oder unabhängig voneinander ausführbar.

Für eine vielseitig gestaltbare Kopplung der Höhen- und Winkelverstellung der Schubeinheit ist es vorteilhaft, dass die Stelleinheit ein Viergelenksystem aufweist, oder eine Führung mit wenigstens einer sich in geodätischer Höhe erstreckenden, nicht linearen Führungsaufnahme oder eine Führung mit zwei nicht parallelen linearen Führungsaufnahmen bildet, wobei an den Führungsaufnahmen eine Motorhalterung verstellbar geführt ist. Alternativ können Höhen- und Winkelverstellung der Schubeinheit auch nicht gekoppelt, d.h. unabhängig voneinander erfolgen.

Dadurch, dass die bug- und/oder die heckseitigen Tragflügel Teil einer durchstoßenden oder nicht durchstoßenden Tragflügelanordnung sind, oder dass die bug- und/oder heckseitigen Tragflügel miteinander zur Bildung einer durchlaufenden Tragflügelanordnung miteinander gekoppelt sind, kann das Wasserfahrzeug vielseitig gestaltet und so auf individuelle Bedürfnisse ausgerichtet werden. Hierbei können auch durchlaufende Tragflügelanordnungen entweder durchstoßender oder nichtdurchstoßender Art verwendet sein.

Eine auf verschiedene Betriebs- und Belastungszustände optimierte Einstellung der oben beschriebenen verstellbaren Komponenten des Wasserfahrzeugs wird dadurch erreicht, dass dem Bootskörper eine Sensorik zugeordnet ist, die die Wasserhöhe in der Nähe des Bootskörpers, insbesondere in Fahrtrichtung vor, unter und/oder hinter dem Wasserfahrzeug ermittelt, und/oder dass die Sensorik einen Belastungsmesser aufweist, der die auf einen oder mehrere Tragflügel einwirkende Auftriebskraft mittelbar oder unmittelbar ermittelt, und/oder dass die Sensorik die Lage und/oder die Beschleunigung und/oder die Geschwindigkeit zumindest eines Teils des Bootskörpers im Raum ermittelt, und dass in Abhängigkeit des mindestens eines von der Sensorik ermittelten Messwertes eine Steuereinheit die Höhenverstellung der Tragflügelanordnung und/oder der Tragflügel steuert. So kann aufgrund des mindestens einen ermittelten Messwertes ein Algorithmus vordefiniert werden, welcher dann eine gezielte Steuerungsaktion, wie etwa ein Verstellen der vorderen Tragflügel, auslöst. Verschiedene Belastungszustände können beispielsweise durch die Bewegungen von Passagieren induziert werden. Durch ihre Bewegung und somit ihrem variierenden Abstand zum Masseschwerpunkt des Bootskörpers 10 verändern sie die Momentenbilanz und können ebenfalls von der Sensorik erfasst werden.

Ein vereinfachter Aufbau wird dadurch erreicht, dass zumindest eine der Tragflügelanordnungen oder zumindest ein Tragflügel einen Tragflügelbereich aufweist, wobei der Tragflügelbereich zwei Bauteile, insbesondere Flügelteile der Tragflügelanordnung oder der Tragflügel, miteinander verbindet oder mindestens ein Ende der Tragflügelanordnung oder des Tragflügels bildet. Dabei ist der Tragflügelbereich dergestalt, dass er bei Belastung in eine Belastungsrichtung eine Verstellung der Tragflügelanordnung oder von zumindest einem Teil des Tragflügels in eine Verstelllage bewirkt, die nicht dieser Belastungsrichtung entspricht. Denkbar ist natürlich auch eine Verstelllage in Belastungsrichtung oder eine Kombination beider Verstellungen. Hierdurch werden gezielte Verformungen oder Reaktionen zugelassen. Sie können durch hydrodynamische Kräfte und Momente oder durch über Mechanismen eingebrachte Kräfte und Momente, beispielsweise Aktuatoren, gezielt aufgeprägt werden, so dass die Tragflächenanordnungen und/oder die Tragflächen in die gewünschten Lagen und Formen gebracht werden. Bei Reduktion der verformenden Kraft oder des Moments kommt es zu einer entsprechenden Rückstellung. Dies kann die Anzahl der für eine Verformung benötigten Gelenke und Federmechanismen reduzieren. Zudem wird die Fahrdynamik durch die Möglichkeit unabhängiger Verformungen erhöht. Auch wird eine gute Stabilisierung, insbesondere unter unsymmetrischen Verhältnissen wie Kurvenfahrten oder diagonalen Querungen von Wellen erreicht. Denn insbesondere durch unsymmetrische Kräfte werden unsymmetrische Verformungen der flexiblen Tragflügelbereiche hervorgerufen. Diese können vorteilhafter Weise dazu führen, dass sich die Auftriebskräfte der Tragflügel ebenfalls unsymmetrisch verteilen und dabei das Wasserfahrzeug stabilisieren. Bei einem Wasserfahrzeug mit durchstoßenden Tragflügeln in einer Kurvenfahrt beispielsweise kann sich durch Zentripetalkräfte die Lage der Tragflügel im Wasser derart gestalten, dass sich die effektive Auftriebsfläche der Tragflügel bzgl. der kurveninnenseitigen Bootshälfte vergrößert, während sie sich bzgl. der kurvenaußenseitigen Bootshälfte verringert. Hierdurch resultiert eine Auftriebskraft, welche der Rollbewegung des Wasserfahrzeugs entgegen wirkt und es somit stabilisiert. Die Änderung der effektiven Auftriebsfläche kann sich zum einen durch die Verformung der Tragflügel, zum anderen aber auch durch ihren eingetauchten Anteil und Eintauchwinkel, meist aber durch die Kombination der Einflüsse ergeben.

Ein Aufbau derart, dass der Tragflügelbereich als Schichtelement ausgebildet ist, wobei die Schichten von Fasermaterialien gebildet sind, und dass die Haupt-Faserrichtung der Fasermaterialien zumindest zweier benachbarter Schichten voneinander abweichen, ermöglicht es, definierte Verformungseigenschaften bei gleichzeitig hoher Stabilität vorzusehen.

Ähnliches bewirkt die Ausgestaltungsvariante, dass die Tragflügelbereiche einen unsteten Querschnittsverlauf aufweisen.

Nachfolgend wird die Erfindung anhand von Ausführungsbeispielen unter Bezugnahme auf die Zeichnungen näher erläutert. Es zeigen:
- Fig. 1: Ein Wasserfahrzeug in perspektivischer Darstellung,
- Fig. 2: das Wasserfahrzeug gemäß Fig. 1, Ansicht von hinten,
- Fig. 3: ein Wasserfahrzeug in perspektivischer Darstellung mit einer durchlaufenden heckseitigen Tragflügelanordnung,
- Fig. 4: das Wasserfahrzeug gemäß Fig. 3 in Seitenansicht,
- Fig. 4a: ein Heck eines Wasserfahrzeugs mit Parallelschwinger, schwingend im Uhrzeigersinn, in schematischer Teilansicht,
- Fig. 4b: ein Heck eines Wasserfahrzeugs mit Parallelschwinger, schwingend gegen den Uhrzeigersinn, in schematischer Teilansicht,
- Fig. 5: das Wasserfahrzeug gemäß Fig. 3, Ansicht von hinten,
- Fig. 6: eine bugseitige Tragflügelanordnung in perspektivischer Darstellung,
- Fig. 7: eine heckseitige Tragflügelanordnung und einen Bootsantrieb in perspektivischer Darstellung,
- Fig. 8: an einem Wasserfahrzeug wirksame Momente durch horizontale Kräfte in einer schematischen Seitenansicht,
- Fig. 9: an dem Wasserfahrzeug gemäß Fig. 8 wirksame Momente durch vertikale Kräfte in schematischer Seitenansicht,
- Fig. 10: ein Wasserfahrzeug mit weit ausgefahrenen Tragflügelanordnungen in schematischer Seitenansicht,
- Fig. 11: das Wasserfahrzeug gemäß Fig. 10 mit teilweise ausgefahrenen Tragflügelanordnungen in schematischer Seitenansicht,
- Fig. 12: das Wasserfahrzeug gemäß Fig. 10 mit eingefahrenen Tragflügelanordnungen in schematischer Seitenansicht,
- Fig. 13: ein Heck eines Wasserfahrzeugs mit Bootsantrieb in schematischer Teilansicht,
- Fig. 14: eine schematische Darstellung einer Stelleinheit in Seitenansicht,
- Fig. 15: eine Stelleinheit in perspektivischer Ansicht,
- Fig. 16: eine Stelleinheit in Seitenansicht,
- Fig. 17: eine schematische Darstellung von Tragflügeln,
- Fig. 18: einen Tragflügel in perspektivischer und Seitenansicht,
- Fig. 19: eine Verformung eines Tragflügels in perspektivischer Ansicht,
- Fig. 20: einen Tragflügelbereich in perspektivischer Teilansicht,
- Fig. 21: einen Tragflügelbereich in perspektivischer Teilansicht,
- Fig. 22: einen Tragflügelbereich mit verjüngtem Querschnitt in perspektivischer Ansicht,
- Fig. 23: den Tragflügelbereich gemäß Fig. 22 unter Verdrillung,
- Fig. 24: den Tragflügelbereich gemäß Fig. 22 unter Verbiegung,
- Fig. 25: einen Tragflügelbereich mit planem Querschnitt in perspektivischer Ansicht,
- Fig. 26: den Tragflügelbereich gemäß Fig. 25 unter Verbiegung und
- Fig. 27: den Tragflügelbereich gemäß Fig. 26 unter Verdrillung.

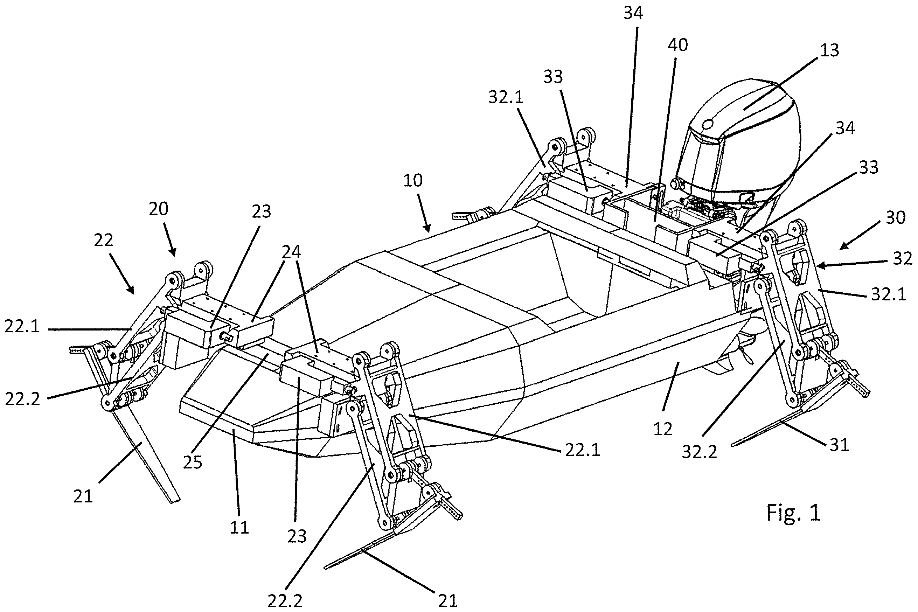

Fig. 1 zeigt ein Wasserfahrzeug mit einem Bootskörper 10, welcher einen Bug 11 und ein Heck 12 aufweist. Im Bug- und im Heckbereich ist jeweils eine Tragflügelanordnung 20 bzw. 30 mit dem Bootskörper 10 derart verbunden, dass eine Kraftübertragung von der Tragflügelanordnung 20, 30 auf den Bootskörper 10 erfolgen kann. Die Verbindung kann unmittelbar oder mittelbar, beispielsweise über eine Befestigung 40 für einen Bootsantrieb 13 vorgenommen sein. An denjenigen Enden der Tragflügelanordnungen 20, 30, die dafür vorgesehen sind, unter die Wasseroberfläche einzutauchen, befinden sich jeweils beidseitig des Bootskörpers 10 angeordnete Tragflügel 21, 31. Hierbei handelt es sich um sogenannte C-Flügel, welche nicht miteinander verbunden sind. Möglich sind auch andere Formen. Die Tragflügel 21,31 sind unter anderem über Verstelleinheiten 22, 32 bewegbar mit dem Bootskörper 10 gekoppelt.

Am heckseitigen Ende des Bootskörpers 10 ist mittels einer Befestigung 40 ein Bootsantrieb 13 angeordnet. In dem vorliegenden Ausführungsbeispiel handelt es sich um einen Außenbordmotor, denkbar wäre jedoch auch eine andere Antriebskonfiguration, beispielsweise ein Innenbordmotor. An der Befestigung 40 ist zudem die heckseitige Tragflügelanordnung 30 angebracht.

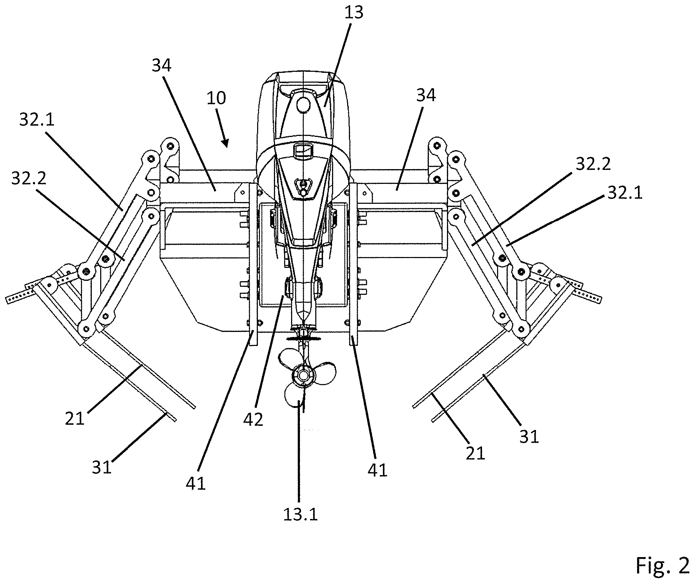

Wie aus Fig. 2 ersichtlich weist die Befestigung 40 eine Stelleinheit 41 und eine Motorhalterung 42 auf, mit welcher der Bootsantrieb 13 fest, jedoch lösbar, beispielsweise mittels Schrauben verbunden ist. Als Schubeinheit an dem Bootsantrieb 13 dient eine Schiffschraube 13.1. Jedoch sind auch andere Schubeinheiten, wie etwa ein Strahlantrieb, denkbar.

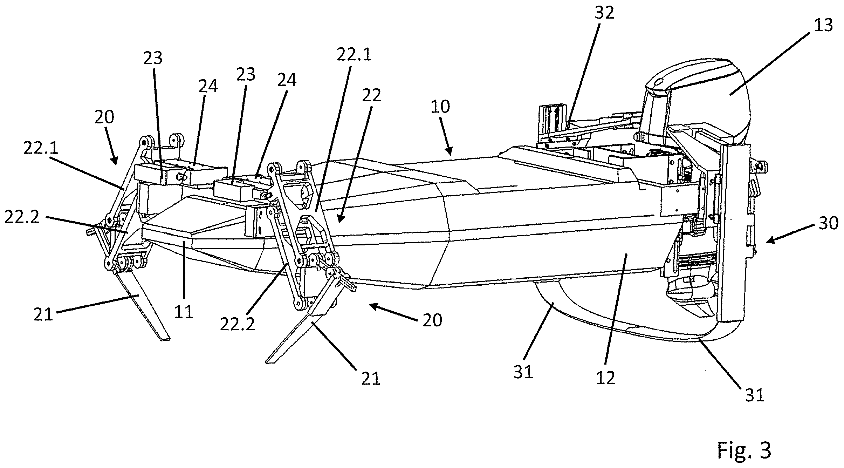

Fig. 3 zeigt ein Wasserfahrzeug mit einem Bootskörper 10, an welchem die heckseitige Tragflügelanordnung 30 durchlaufend ausgeführt ist. Dies wird dadurch erreicht, dass die Tragflügel 31 auf der unter der Wasseroberfläche eintauchenden Seite unmittelbar miteinander gekoppelt sind.

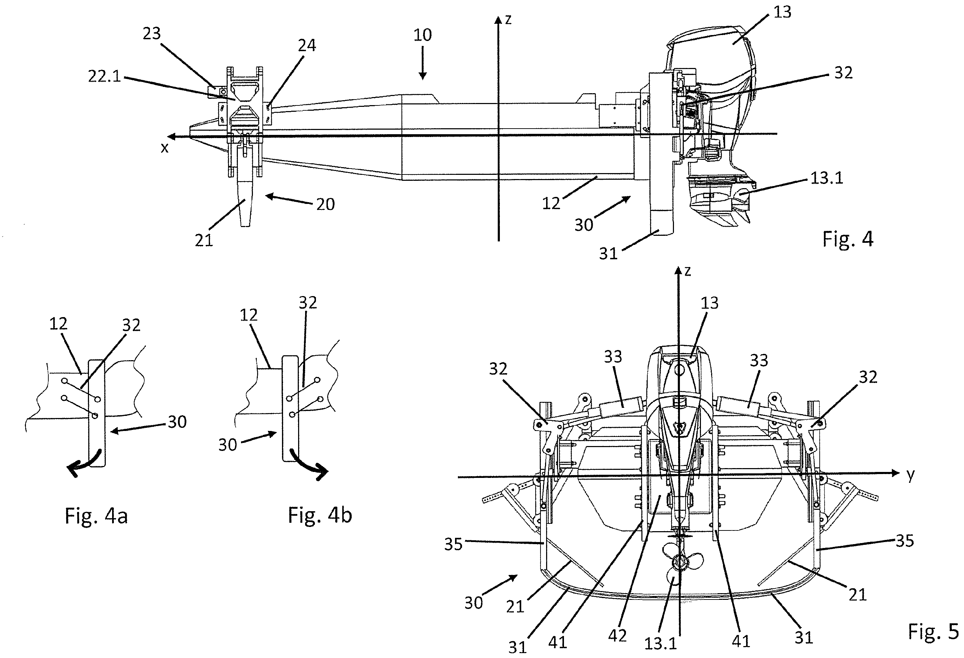

Eine Seitenansicht des in Fig. 3 gezeigten Wasserfahrzeuges ist in Fig. 4 dargestellt. Fig. 5 zeigt eine Ansicht von hinten. Wie Fig. 5 erkennen lässt, sind die Tragflügel 21 der bugseitigen Tragflügelanordnung 20 schräg bzgl. einer Mittellängsebene (xz-Ebene, x-Achsenverlauf s. Fig. 4) des Bootskörpers 10 ausgerichtet. Hingegen verlaufen die miteinander gekoppelten Tragflügel 31 nahezu senkrecht bzgl. der Mittellängsebene des Bootskörpers 10. Sie sind über nahezu in z-Richtung verlaufende Tragflügelteile 35 mit der Verstelleinheit 32 verbunden.

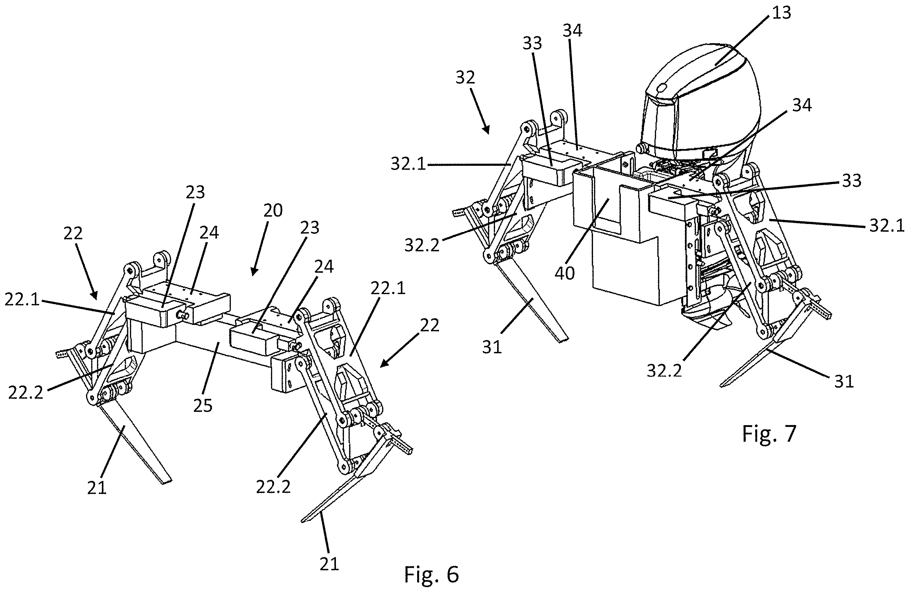

Details einer bugseitigen bzw. heckseitigen Tragflügelanordnung 20 bzw. 30 sind in Fig. 6 bzw. 7 dargestellt. Fig. 6 zeigt eine bugseitige Tragflügelanordnung 20 mit Tragflügeln 21 und Verstelleinheiten 22. Auf der wasserabgewandten Seite befindet sich für die beidseitig angeordneten Tragflügel 20 je einen Antrieb 23, welcher an je einer Halterung 24 angebracht ist. Die Halterungen 24 wiederum sind an einer Brücke 25 befestigt, welche in y-Richtung verläuft, so dass sie die beidseitig angeordneten Elemente verbindet. An den Halterungen 24 sind die Verstelleinheiten 22 beweglich befestigt. Diese weisen parallel verlaufende Hebel 22.1 und 22.2 auf, welche über Gelenke und Übergangsstücke schwenkbar miteinander verbunden sind. Auf diese Weise sind die an den Verstelleinheiten 22 angeordneten Tragflügel 21 in der Höhe verstellbar. Zudem lassen sich die Tragflügel 21 in ihrer Neigung variieren.

Die in Fig. 7 gezeigte heckseitige Tragflügelanordnung 30 mit Tragflügeln 31 und Verstelleinheiten 32 weist für beide Tragflügel je einen Antrieb 33 auf, welcher an je einer Halterung 34 angebracht ist. Die Halterungen 34 sind beidseitig an der Befestigung 40 für den Bootsantrieb 13 angebracht. An den Halterungen 34 sind die Verstelleinheiten 32 beweglich befestigt. Diese weisen parallel verlaufende Hebel 32.1 und 32.2 auf, welche über Gelenke und Übergangsstücke schwenkbar miteinander verbunden sind. Auf diese Weise sind die an den Verstelleinheiten 32 angeordneten Tragflügel 31 verstellbar.

In den Figuren 4-7 sind die Hebel 22.1 und 22.2 bzw. 32.1 und 32.2 um die x-Achse schwenkbar. Denkbar ist es jedoch auch, die Hebel 22.1 und 22.2 bzw. 32.1 und 32.2 um die y-Achse schwenkbar vorzusehen, wie Fig. 4a und 4b als Konstruktionsvarianten veranschaulichen. Derartige Hebelmechanismen sind besonders wartungsfreundlich und bedingen einen geringen baulichen Aufwand.

Die in den Figuren 1-7 gezeigten Ausführungen erlauben eine individuelle Verstellung der einzelnen Tragflügel 21, 31 und/oder der Tragflügelanordnungen 20, 30 über die jeweils für jeden Tragflügel 21, 31 vorhandenen Antriebe 23, 33. Die Antriebe 23, 33 können elektrischer, mechanischer oder hydraulischer Natur sein oder auch manuell betrieben werden. Zudem lässt sich der Bootsantrieb 13 mittels der Stelleinheit 40 höhenverstellen und/oder in seiner Winkellage ändern. Die Verstellung dieser Komponenten ändert die Kraft- und Momentenbilanz und erlaubt auf diese Weise die Anpassung an unterschiedliche Betriebs- und Belastungszustände. Beispielsweise kann eine Trimmung (longitudinal und lateral) des Wasserfahrzeugs erfolgen und eine Kurven- und/oder Wellenfahrt verbessert werden. Die Verstellung der Tragflügelanordnungen 20, 30 bzw. der Tragflügel 21, 31 kann gekoppelt ausgeführt werden. Insbesondere ist es für einen ausgeglichenen Momentenhaushalt sinnvoll, die Stellung des Bootsantriebs 13 mit der Verstellung der heckseitigen Tragflügelanordnung 30 zu koppeln, wobei die Kopplung mit- oder gegenläufig ausgeführt sein kann.

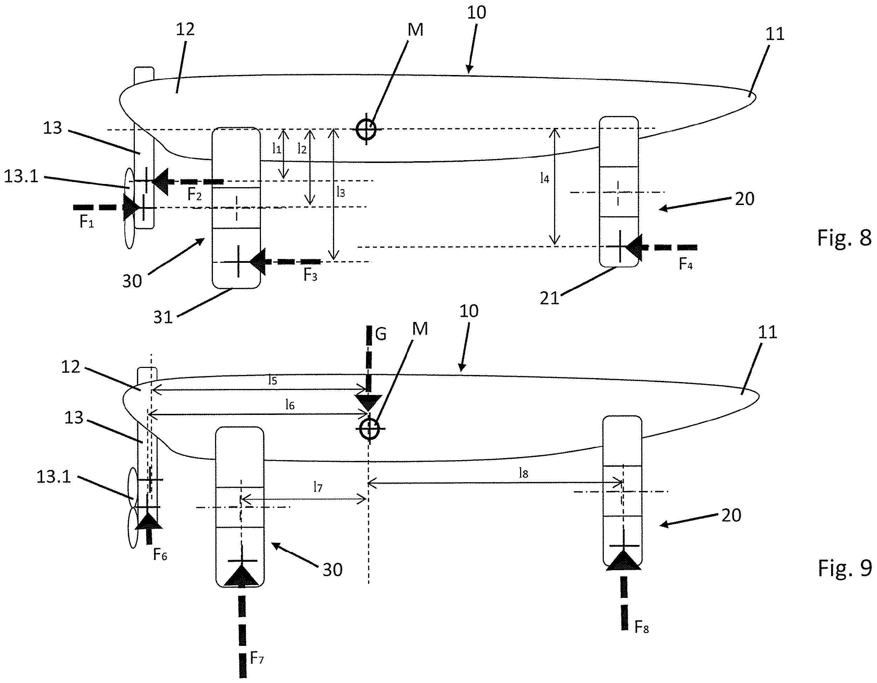

Fig. 8 und Fig. 9 visualisiert die im Wasser vorwiegend wirksamen Momente bzgl. des Massenschwerpunkts M des Wasserfahrzeuges, in weit ausgefahrenem Zustand der Tragflügel 21,31. Die Momente ergeben sich durch die über die Tragflügel 21,31 und den Bootsantrieb angreifenden resultierenden Kräften F1-F8 und ihre Hebelarme I1-I8. Fig. 8 veranschaulicht die Wirkung der resultierenden horizontalen, d.h. orthogonal zur Schwerkraft wirkenden, Kräfte. In Fig. 9 sind die in Richtung der Schwerkraft wirkenden, vertikalen Kräfte dargestellt. Es sei angemerkt, dass die Länge der Kraftpfeile nicht proportional ist zu deren Betrag. F1 stellt die Antriebskraft des Bootsantriebs 13 dar, F2 bis F4 die Strömungswiderstandskräfte des Bootsantriebs 13 bzw. der Tragflügel 21, 31, G die Gewichtskraft und F6 bis F8 die der Gewichtskraft entgegenwirkenden Auftriebskräfte des Bootsantriebs 13 bzw. der Tragflügel 21, 31. Über die Höhen- und Winkeländerungen lassen sich nun die wirksamen Hebelarme I1-I8 zumindest teilweise verstellen, sowie zumindest teilweise die Richtung und der Betrag der wirksamen Kräfte F1 bis F8 ändern. Auf diese Weise ergeben sich vielfältige Möglichkeiten, den Momentenhaushalt und darüber die Lage des Bootes im Wasser zu beeinflussen. Einen großen Anteil an der Gesamtbilanz haben die Antriebskraft F1 und die resultierende Auftriebskraft F7der heckseitigen Tragflügelanordnung 30, deren Momente sich entgegen wirken. Vorteilhafterweise nimmt die hintere Tragflügelanordnung über 65% an der Gesamtauftriebskraft auf. Daher kann durch eine Kopplung der Verstellung dieser Momente derart, dass sie ein gewünschtes Verhältnis ergeben, der Momentenhaushalt und die Schwerpunktsverlagerung, sowie die Lage des Bootskörpers aufwandsoptimiert gesteuert werden.

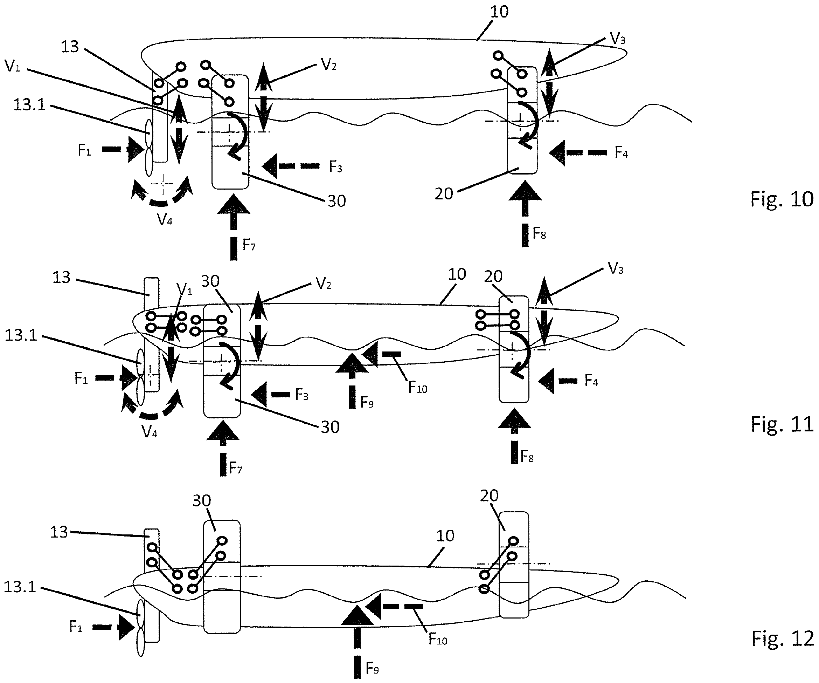

Die Figuren 10 bis 12 zeigen unterschiedliche Ausfahrzustände der verstellbaren Komponenten, d.h. der Tragflügelanordnungen 20, 30 bzw. des Bootsantriebs 13.1, und den damit verbundenen Lagen des Bootskörpers 10 im WasserEine solche Abfolge von Ausfahrzuständen ist typisch für den Übergang von einer Schnellfahrt, mit weit ausgefahrenen Komponenten (Fig. 10) über eine Abbremsphase mit teilweise eingezogenen Komponenten (Fig. 11) hin zu einem Aufstoppen mit voll eingefahrenen Komponenten (Fig. 12). Die Lagen des Bootskörpers 10 ergeben sich aus entsprechend des Fahrzustandes eingestellten Kräften und Momenten. Dabei ist in den betreffenden Figuren eine Höhenverstellung durch Schwenkung um die y-Achse vorgesehen. V1 bis V3 visualisieren dabei die Höhen-Verstellmöglichkeiten der Tragflügelanordnungen 20, 30 bzw. des Bootsantriebs 13.1 und V4 die Winkel-Verstellmöglichkeit des Bootsantriebs 13.1.

In Fig. 10 steht der Bootskörper 10 aufgrund der weit ausgefahrenen Komponenten nicht in Berührung mit der Wasseroberfläche und das Wasserfahrzeug entspricht einem Tragflügelboot. Demgemäß wirken die in Fig. 8 und 9 beschriebenen Kräfte F1 bis F8. Im teilweise eingefahrenen Zustand der Komponenten (Fig. 11) kommt der Bootskörper 10 in Kontakt mit der Wasseroberfläche bzw. durchbricht sie zum Teil, so dass über den im Wasser befindlichen Teil des Bootskörpers 10 zusätzliche Auftriebs(F9)- und Widerstandskräfte(F10) wirksam werden. Bei vollständig eingezogenen Komponenten (Fig. 12) werden über die Tragflügel 21, 31 keine Kräfte F3 bis F8 mehr eingeleitet und das Wasserfahrzeug entspricht nun einem Gleiter.

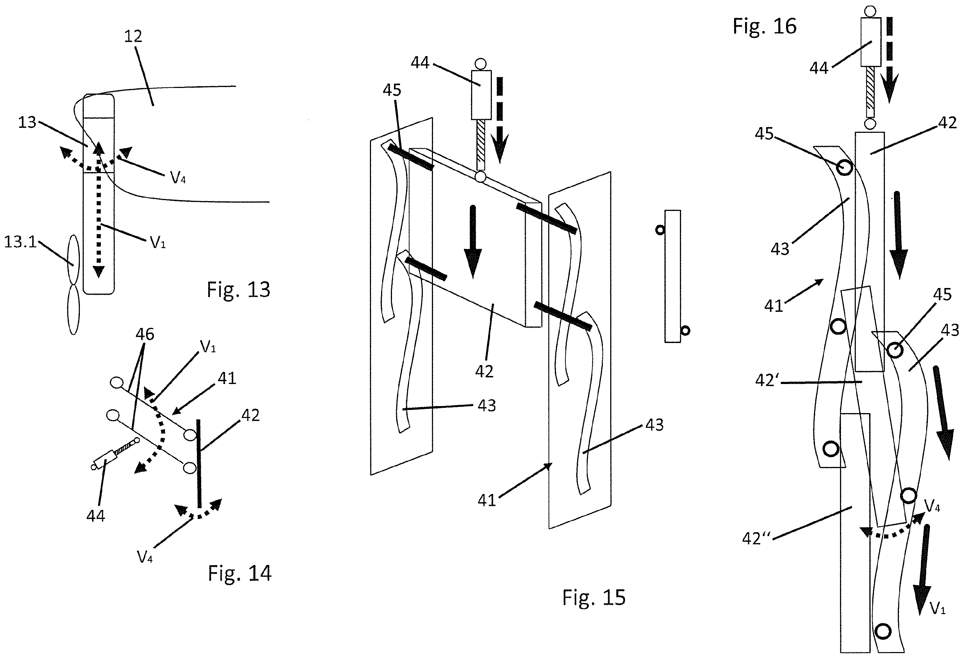

In den Figuren 13 bis 16 werden mögliche Ausgestaltungsvarianten zur Verstellung des Bootsantriebs 13 konkretisiert, so dass die in Fig. 13 gezeigten Verstellmöglichkeiten in der Höhe (V1) und im Winkel (V4) durchgeführt werden können. In einer einfachen Variante (Fig. 14) weist die Stelleinheit 41 zwei parallele Hebelarme 46 auf, über welche die Motorhalterung 42 verstellbar, beispielsweise über Gelenke, an dem Bootskörper 10 angeordnet ist. Die Verstellung erfolgt über einen Aktuator 44, welcher beispielsweise hydraulisch betrieben sein kann. Aber auch eine mechanische, elektrische oder manuelle Bedienung ist möglich. Es ist denkbar, die Hebelarme teleskopartig auszugestalten, so dass Höhen- und Winkelverstellung simultan durchführbar sind.

Fig. 15 und 16 zeigen eine Variante der Stelleinheit 41, in welcher die Führung der Motorhalterung 42 über Führungsaufnahmen 43 erfolgt. Hierzu ist die Motorhalterung 42 über Führungsstücke 45 mit der Führungsaufnahme 43 gekoppelt. Für die Höhenverstellung ist der Aktuator 44 vorgesehen. Die Wirkung der Führungsaufnahme 43 ist in Fig. 16 gezeigt, welche die Motorhalterung 42 in unterschiedlichen Positionen darstellt (42, 42', 42"). Erkennbar ist die Kopplung der Höhen- und Winkelverstellung, die über die spezifische Form der Führungsaufnahmen 43 zustande kommt. Über unterschiedliche Formen der Führungsaufnahmen 43 können unterschiedliche Kopplungen der Höhen- und Winkelverstellung realisiert werden.

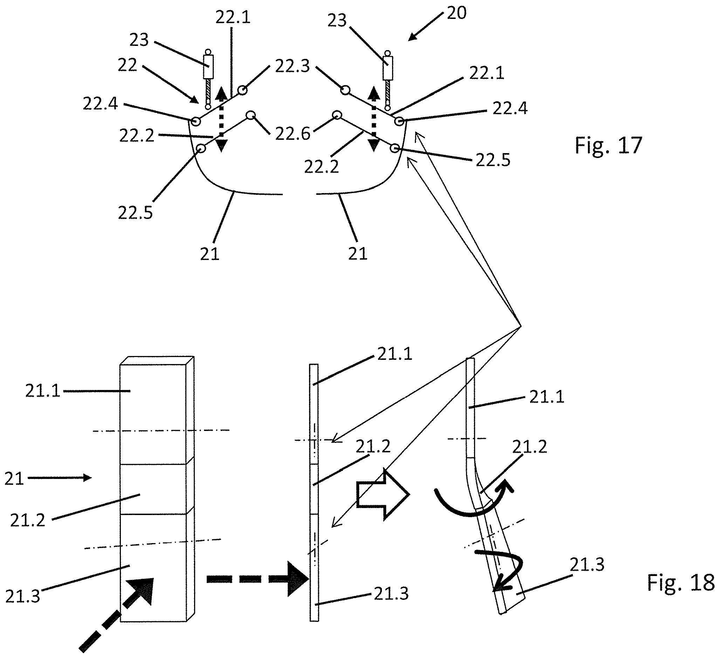

Fig. 17 zeigt die Tragflügelanordnung 20 mit flexiblen Tragflügeln 21, deren flexibleTragflügelbereiche 21.2 in den nachfolgenden Figuren 18 bis 27 detaillierter beschrieben werden. In Fig. 17 sind die Tragflügel 21 über Verstelleinheiten 22 mit dem Bootskörper 10 beweglich verbindbar. Die Verstelleinheiten 22 weisen parallel verlaufende Hebel 22.1 und 22.2 auf, welche über Gelenke 22.3-22.6 schwenkbar sind. Über Aktuatoren 23 sind die Verstelleinheiten 22 und somit die an ihnen angeordneten Tragflügel 21 in der Höhe verstellbar. Ändern sich durch die Verstellung die Kräfteverhältnisse, werden die Tragflügel aufgrund ihrer Flexibilität gezielt verformt. Dabei können die flexiblen Tragflügel 21 derart ausgelegt sein, dass sich durch die Belastung eine Verstelllage ergibt, die nicht dieser Belastungsrichtung entspricht. Neben der passiven Verformung durch von außen auf das Wasserfahrzeug wirkende Kräfte können die flexiblen Tragflügelbereiche 21.1 über Aktuatoren verformt werden.

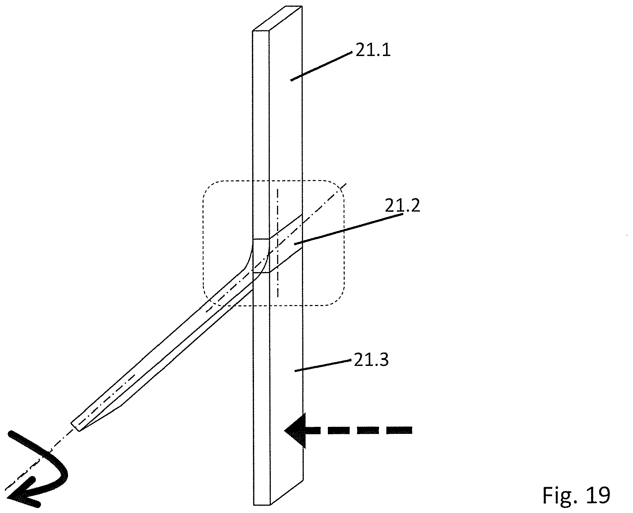

In Fig. 18 ist ein flexibel gestalteter Tragflügel 21 in einer beispielhaften Variante dargestellt. Die Figur zeigt eine perspektivische Frontansicht, eine Seitenansicht in unverstellter Lage und eine Seitenansicht in durch eine Kraft verstellter Lage des Tragflügels 21. Der Tragflügel 21 weist zwei Flügelteile 21.1 und 21.3 auf, welche durch einen Tragflügelbereich 21.2 miteinander verbunden sind. An der Längsmittelachse des Tragflügelteils 21 (s. perspektivische Ansicht) greift am Flügelteil 21.3 von links (bzgl. der Seitenansicht) eine Kraft an. Der flexible Tragflügelbereich 21.2 lässt nun nicht nur eine Verbiegung nach rechts zu, sondern bewirkt zudem eine Verdrillung, die nicht der Belastungsrichtung entspricht. Auf diese Weise könnte eine Auftriebskraft sowohl eine Winkeländerung des eines Tragflügelteils 21.3 bezüglich einer Mittellängsebene als auch eine Änderung des Anstellwinkels und so der effektiven Auftriebsfläche bewirken. Wie Fig. 19 zeigt, kann der flexible Tragflügelbereich 21.2 jedoch auch für eine reine Biegeverformung ausgelegt sein. Wird die verformende Kraft vermindert oder entfernt, so stellt sich die Verformung entsprechend zurück. Zudem könnte sich der flexible Tragflügelbereich 21.2 über den kompletten Tragflügel 21 erstecken, so dass dieser ein einziges flexibles Element ist. Dabei kann er Bereiche unterschiedlicher Flexibilität aufweisen.

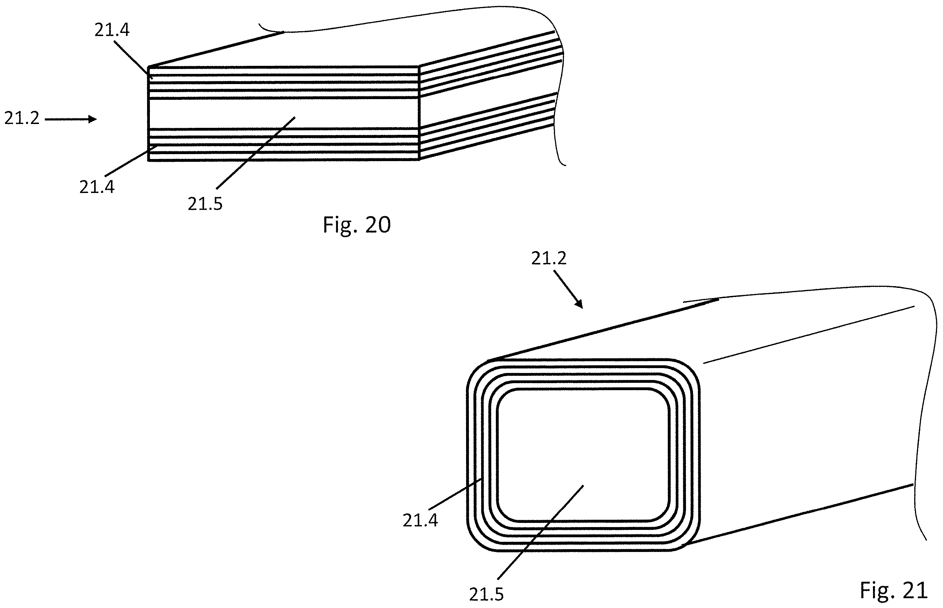

Fig. 20 und 21 zeigen typische Aufbauten flexibler Tragflügelbereiche 21.2. Sie weisen ein flexibles Kernbauteil 21.5 auf, welches zumindest teilweise flächig (Fig. 20) oder umlaufend (Fig. 21) von Schichten 21.5 umgeben sind. Die einzelnen Schichten können mit unterschiedlichen Fertigungsmethoden wie Tuften, Nähen etc. hergestellt werden. Als Materialien kommen beispielsweise Kohlefaser, Glasfaser, Aramidfaser, Basalt, Naturfasertypen etc. in Frage. Jedes der Materialien bietet unterschiedliche Vorteile, so dass auch eine Kombination möglich ist. Beispielsweise weist Kohlefaser eine hohe Stabilität auf, ist jedoch kostenintensiv. Glasfaser ist leicht, Armid nichtsplitternd und Basalt chemisch stabil gegenüber Salzwasser, d.h. er muss nicht behandelt werden. Das Schichtmaterial, die Schichtdicke, -art und/oder -orientierung bestimmen die Reaktion des flexiblen Tragflügelbereiches 21.2 unter Belastung. Im einfachsten Fall kann der gesamte flexible Tragflügelbereich 21.2 aus einem soliden, isotopen Material bestehen.

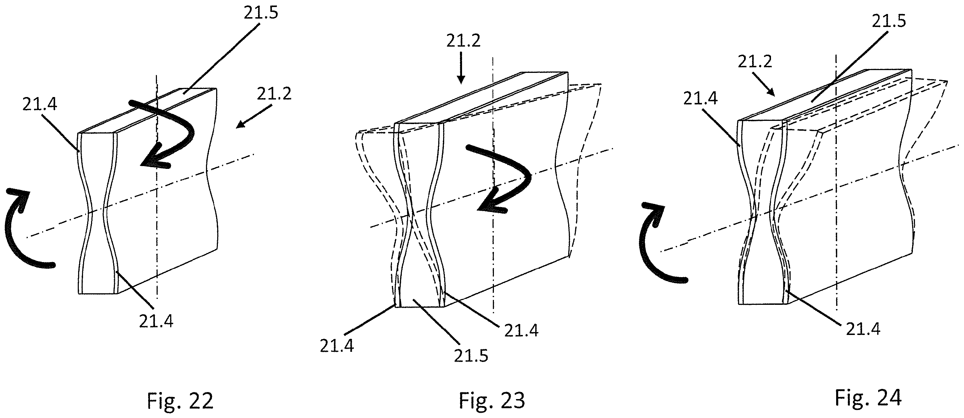

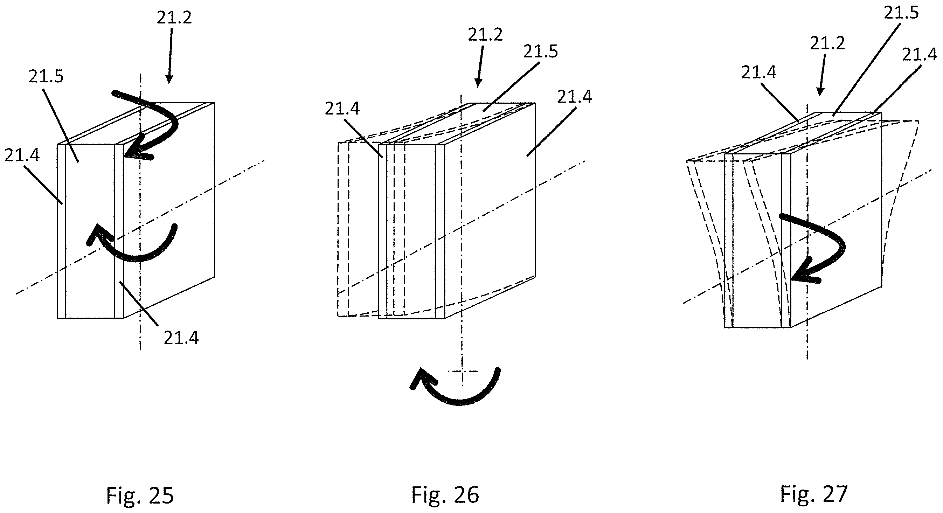

Das flexible Kernbauteil 21.5 kann je nach gewünschter Stärke der Auslenkung eine Verjüngung aufweisen, wie in den Fig. 22 bis 24 gezeigt. Die Figuren zeigen die Reaktionen eines verjüngten flexiblen Tragflügelbereiches 21.2 auf unterschiedliche Belastungen. Alternativ kann ein planes Kernbauteil 21.5 verwendet werden. Reaktionen eines planen flexiblen Tragflügelbereiches 21.2 auf unterschiedliche Belastungszustände sind in den Figuren 25 bis 27 gezeigt.

Durch flexible Tragflügelbereiche 21.2 lässt sich die Anzahl der zu verwendenden Gelenke und Federn reduzieren, was den Aufbau des Wasserfahrzeuges erleichtern und es weniger störanfällig machen kann. Zudem können die flexiblen Tragflügelbereiche 21.2 für eine gewisse Dämpfung von Stößen und Vibrationen sorgen.

Die oberen Ausführungen des erfindungsgemäßen Wasserfahrzeugs verdeutlichen vielseitige Einsatzmöglichkeiten desselben durch seine hohe Variabilität. So erlauben beispielsweise die diversen unterschiedlichen Verstellmöglichkeiten eine stabile Wasserlage bei gleichzeitig hoher Fahrdynamik unter unterschiedlichen Verhältnissen.

## Patentansprüche

1. Wasserfahrzeug mit einem Bootskörper (10), der im Bereich des Hecks (12) und des Bugs (11) jeweils eine Tragflügelanordnung (20, 30) aufweist,
wobei die Tragflügelanordnungen (20, 30) jeweils Tragflügel (21, 31) aufweisen, die beidseitig des Bootskörpers (10) angeordnet sind,
und wobei die Tragflügelanordnungen (20, 30) jeweils an wenigstens eine Verstelleinheit (22, 32) derart angekoppelt sind, dass die bugseitige Tragflügelanordnung (20) und die heckseitige Tragflügelanordnung (30) jeweils individuell höhenverstellbar sind,
**dadurch gekennzeichnet,**
**dass** die Tragflügel (21) der bugseitigen Tragflügelanordnung (20) und/oder die Tragflügel (31) der heckseitigen Tragflügelanordnung (30) jeweils individuell höhenverstellbar sind,
**dass** dem Bootskörper (10) ein Bootsantrieb (13) mit einer Schubeinheit zugeordnet ist,
**dass** der Bootsantrieb (13) oder zumindest ein Teil des Bootsantriebs (13) höhenverstellbar an den Bootskörper (10) angeschlossen ist,
**dass** eine Stelleinheit (41) für die Verstellung des Bootsantriebs (13) oder des verstellbaren Teils des Bootsantriebs (13) vorgesehen ist
und **dass** die Stelleinheit (41) mit den Verstelleinheiten (22, 32) der Tragflügel (21, 31) und/oder der Tragflügelanordnungen (20, 30) synchronisiert ist.

2. Wasserfahrzeug nach Anspruch 1,
**dadurch gekennzeichnet,**
**dass** die Schubeinheit eine Schiffschraube (13.1) oder ein Strahlantrieb ist.

3. Wasserfahrzeug nach Anspruch 1 oder 2,
**dadurch gekennzeichnet,**
**dass** jedem Tragflügel (21, 31) eine Verstelleinheit (22, 32) mit einem Antrieb (23, 33) für die Höhenverstellung zugeordnet ist.

4. Wasserfahrzeug nach Anspruch 3,
**dadurch gekennzeichnet,**
**dass** die Verstelleinheiten (22, 32) der bug- und/oder der heckseitigen Tragflügel (21, 31) oder der Tragflügelanordnungen (20, 30) über einen Hebelmechanismus an den Bootskörper (10) angeschlossen sind.

5. Wasserfahrzeug nach Anspruch 4,
**dadurch gekennzeichnet,**
**dass** der Hebelmechanismus ein Viergelenksystem und/oder ein Schienensystem ist, oder aufweist.

6. Wasserfahrzeug nach einem der Ansprüche 1 bis 6,
**dadurch gekennzeichnet,**
**dass** die Stelleinheit (41) derart ausgestaltet ist, dass sowohl die Höhenzuordnung (V1) der Schubeinheit zum Bootskörper (10) als auch die Winkellage (V4) der Schubeinheit einstellbar ist.

7. Wasserfahrzeug nach einem der Ansprüche 1 bis 6,
**dadurch gekennzeichnet,**
**dass** die Stelleinheit (41) ein Viergelenksystem aufweist, oder eine Führung mit wenigstens einer sich in geodätischer Höhe erstreckenden, nicht linearen Führungsaufnahme (43) oder eine Führung mit zwei nicht parallelen linearen Führungsaufnahmen bildet, wobei an den Führungsaufnahmen (43) eine Motorhalterung (42) verstellbar geführt ist.

8. Wasserfahrzeug nach einem der Ansprüche 1 bis 7,
**dadurch gekennzeichnet,**
**dass** die bug- und/oder die heckseitigen Tragflügel (21, 31) Teil einer durchstoßenden oder nicht durchstoßenden Tragflügelanordnung (20, 30) sind.

9. Wasserfahrzeug nach einem der Ansprüche 1 bis 8,
**dadurch gekennzeichnet,**
**dass** die bug- und/oder heckseitigen Tragflügel (21, 31) zur Bildung einer durchlaufenden Tragflügelanordnung miteinander gekoppelt sind.

10. Wasserfahrzeug nach einem der Ansprüche 1 bis 9,
**dadurch gekennzeichnet,**
**dass** dem Bootskörper (10) eine Sensorik zugeordnet ist, die die Wasserhöhe in der Nähe des Bootskörpers, insbesondere in Fahrtrichtung vor, unter und/oder hinter dem Wasserfahrzeug ermittelt,
und /oder dass die Sensorik einen Belastungsmesser aufweist, der die auf einen oder mehrere Tragflügel (21/ 31) einwirkende Auftriebskraft mittelbar oder unmittelbar ermittelt,
und/oder dass die Sensorik die Lage und/oder die Beschleunigung und/oder die Geschwindigkeit zumindest eines Teils des Bootskörpers (10) im Raum ermittelt,
und **dass** in Abhängigkeit mindestens eines von der Sensorik ermittelten Messwertes eine Steuereinheit die Höhenverstellung der Tragflügelanordnung (20, 30) und/oder der Tragflügel (21, 31) steuert.

11. Wasserfahrzeug nach einem der Ansprüche 1 bis 10,
**dadurch gekennzeichnet,**
**dass** zumindest eine der Tragflügelanordnungen (20, 30) oder zumindest einer der Tragflügel (21, 31) einen flexiblen Tragflügelbereich (21.2) aufweist, wobei der Tragflügelbereich (21.2) zwei Bauteile, insbesondere Flügelteile (21.1, 21.3) der Tragflügelanordnung (20, 30) oder der Tragflügel (21, 31), miteinander verbindet oder mindestens ein Ende der Tragflügelanordnung (20, 30) oder des Tragflügels (21, 31) bildet,
und **dass** der flexible Tragflügelbereich (21.2) ausgebildet ist, bei Belastung in eine Belastungsrichtung eine Verstellung der Tragflügelanordnung (20, 30) oder von zumindest einem Teil des Tragflügels (21, 31) in eine Verstelllage zu bewirken, die nicht dieser Belastungsrichtung entspricht.

12. Wasserfahrzeug nach Anspruch 11,
**dadurch gekennzeichnet,**
**dass** der Tragflügelbereich (21.2) als Schichtelement ausgebildet ist, wobei die Schichten (21.4) von Fasermaterialien gebildet sind,
und **dass** die Haupt-Faserrichtung der Fasermaterialien zumindest zweier benachbarter Schichten (21.4) voneinander abweichen.

13. Wasserfahrzeug nach einem der Ansprüche 11 oder 12,
**dadurch gekennzeichnet,**
**dass** die Tragflügelbereiche (21.2) einen unsteten Querschnittsverlauf aufweisen.

14. Wasserfahrzeug nach einem der Ansprüche 12 oder 13,
**dadurch gekennzeichnet,**
**dass** der Tragflügelbereich (21.2) ein Kernbauteil (21.5) aufweist, auf das beidseitig die Schichten (21.4) aufgebracht sind,
wobei das Kernbauteil ein anderes E-Modul als die Schichten (21.4) aufweist.

15. Wasserfahrzeug nach einem der Ansprüche 11 bis 14,
**dadurch gekennzeichnet,**
**dass** der Tragflügelanordnung (20, 30) oder den Tragflügeln (31, 32) ein verstellbarer Aktuator zugeordnet ist, der bei Verstellung eine Belastung in Belastungsrichtung bewirkt.

## Claims

1. A watercraft having a hull (10) which has each a hydrofoil assembly (20, 30) in the region of the stern (12) and in the region of the bow (11),
the hydrofoil assemblies (20, 30) having hydrofoils (21, 31) arranged on both sides of the hull (10),
wherein the hydrofoil assemblies (20, 30) are coupled to at least one adjustment unit (22, 32) in such a way that the bow-side hydrofoil assembly (20) and the stern-side hydrofoil assembly (30) each are at least partially individually height adjustable,
**characterized**
**in that** the bow-side and/or stern-side hydrofoils (21, 31) are each individually height adjustable,
**in that** a boat drive (13) is assigned to the hull (10), wherein the boat drive (13) has a thrust unit,
**in that** the boat drive (13) or at least a part of the boat drive (13) is vertically adjustably connected to the hull (10),
**in that** an actuating unit (41) for adjustment of the boat drive (13) or the adjustable part of the boat drive is provided,
and **in that** the actuating unit (41) is synchronized with the adjustment units (22, 32) of the hydrofoils (21, 31) and/or the hydrofoil assemblies (20, 30).

2. The watercraft according to claim 1,
**characterized in that** the thrust unit is a marine propeller (13.1) or a jet propulsion mechanism

3. The watercraft according to claim 1 or 2,
**characterized in that** an adjustment unit (22, 32) is assigned to each hydrofoil (21, 31), wherein the adjustment unit (22, 32) has a drive (23, 33) for vertical adjustment.

4. The watercraft according to claim 3,
**characterized in that** the adjustment units (22, 32) of the bow-side and/or the stern-side hydrofoils (21, 31) or of the hydrofoil assemblies (20, 30) are connected to the hull (10) via a lever mechanism.

5. The watercraft according to claim 4,
**characterized in that** the lever mechanism is or has a four-pivot system and/or a rail system.

6. A watercraft according to any of claims 1 to 5,
**characterized in that** the actuating unit (41) is designed such that both the height allocation (V1) of the thrust unit to the hull (10) as well as the angular position (V4) of the thrust unit are adjustable.

7. The watercraft according to any of claims 1 to 6,
**characterized in that** the actuating unit (41) comprises a four-pivot system, or forms a guide having at least one non-linear guide receiving slot (43) extending in geodetic height or a guide having two non-parallel linear guide receiving slots, an engine mount (42) being adjustably guided on the guide receiving slots (43).

8. The watercraft according to any of claims 1 to 7,
**characterized in that** the bow-side and/or stern-side hydrofoils (21, 31) are part of a penetrating or non- penetrating hydrofoil assembly (20, 30).

9. The watercraft according to any of claims 1 to 8,
**characterized in that** the bow-side and/or stern-side hydrofoils (21, 31) are coupled to one another to form a continuous hydrofoil assembly.

10. The watercraft according to any of claims 1 to 9,
**characterized in that** a sensor system is assigned to the hull (10), wherein the sensor system determines the water level near the hull, particularly in the direction of travel in front of, below and/or behind the watercraft,
and/or **in that** the sensor system comprises a strain gauge, which indirectly or directly detects the lifting force acting on one or more hydrofoils (21, 31), and/or **in that** the sensor system detects the position and/or acceleration and/or speed of at least a portion of the hull (10) in space,
and **in that**, based on at least one measured value detected by the sensor system, a control unit controls the vertical adjustment of the hydrofoil assembly (20, 30) and/or of the hydrofoils (21, 31).

11. The watercraft according to any of claims 1 to 10,
**characterized in that** at least one of the hydrofoil assemblies (20, 30) or at least one hydrofoil (21, 31) has a flexible hydrofoil region (21.2), the hydrofoil region (21.2) connecting two components, in particular hydrofoil sections (21.1, 21.3) of the hydrofoil assembly (20, 30) or of the hydrofoils (21, 31), to one another or forming at least one end of the hydrofoil assembly (20, 30) or of the hydrofoil (21, 31),
and **in that** the flexible hydrofoil region (21.2) is designed such that, when acted on by a load in a loading direction, it effects an adjustment of the hydrofoil assembly (20, 30) or of at least a part of the hydrofoil (21, 31) to a position of adjustment that does not coincide with the loading direction.

12. The watercraft according to claim 11,
**characterized in that** the hydrofoil region (21.2) is formed as a layered element, the layers (21.4) being formed from fiber materials,
and **in that** the main fiber direction of the fiber materials of at least two adjoining layers (21.4) are different from one another.

13. The watercraft according to either of claims 11 or 12,
**characterized in that** the hydrofoil regions (21.2) have a discontinuous crosssectional profile.

14. The watercraft according to one of claims 12 or 13,
**characterized in that** the hydrofoil region (21.2) has a core component (21.5), on both sides of which the layers (21.4) are applied,
the modulus of elasticity of the core component being different from that of the layers (21.4).

15. The watercraft according to any of claims 11 to 14,
**characterized in that** an adjustable actuator is assigned to the hydrofoil assembly (20, 30) or to the hydrofoil (31, 32), wherein the adjustable actuator imposes a load in the loading direction during adjustment.

## Revendications

1. Véhicule nautique comprenant une coque de bateau (10) qui présente un agencement d'aile portante (20, 30) dans la zone de la poupe (12) et de la proue (11) respectivement,
les agencements d'aile portante (20, 30) présentant chacun des ailes portantes (21, 31) qui sont disposées des deux côtés de la coque de bateau (10),
et les agencements d'aile portante (20, 30) étant respectivement couplés à au moins une unité de réglage (22, 32) de telle sorte que l'agencement d'aile portante côté proue (20) et l'agencement d'aile portante côté poupe (30) soient respectivement réglables individuellement en hauteur,
**caractérisé**
**en ce que** les ailes portantes (21) de l'agencement d'aile portante côté proue (20) et/ou les ailes portantes (31) de l'agencement d'aile portante côté poupe (30) sont respectivement réglables individuellement en hauteur,
**en ce qu'**un entraînement de bateau (13) avec une unité de poussée est associé à la coque de bateau (10),
**en ce que** l'entraînement de bateau (13) ou au moins l'unité de poussée est raccordé à la coque de bateau (10) de manière réglable en hauteur en tant que partie de l'entraînement de bateau (13),
**en ce qu'**il est prévu une unité de régulation (41) pour le réglage de l'entraînement de bateau (13) ou de l'unité de poussée
et **en ce que** l'unité de régulation (41) est synchronisée avec les unités de réglage (22, 32) des ailes portantes (21, 31) et/ou des agencements d'ailes portantes (20, 30).

2. Véhicule nautique selon la revendication 1,
**caractérisé**
**en ce que** l'unité de poussée est une hélice (13.1) ou un propulseur à réaction.

3. Véhicule nautique selon la revendication 1 ou 2,
**caractérisé**
**en ce qu'**à chaque aile (21, 31) est associée une unité de réglage (22, 32) avec un entraînement (23, 33) pour le réglage de la hauteur.

4. Véhicule nautique selon la revendication 3,
**caractérisé**
**en ce que** les unités de réglage (22, 32) des ailes portantes (21, 31) côté proue et/ou côté poupe ou des agencements d'ailes portantes (20, 30) sont reliées à la coque de bateau (10) par un mécanisme à levier.

5. Véhicule nautique selon la revendication 4,
**caractérisé**
**en ce que** le mécanisme à levier est, ou comprend, un système à quatre articulations et/ou un système de rails.

6. Véhicule nautique selon l'une quelconque des revendications 1 à 6,
**caractérisé**
**en ce que** l'unité de régulation (41) est conçue de telle sorte qu'aussi bien l'association en hauteur (V1) de l'unité de poussée par rapport à la coque de bateau (10) que la position angulaire (V4) de l'unité de poussée sont réglables.

7. Véhicule nautique selon l'une quelconque des revendications 1 à 6,
**caractérisé**
**en ce que** l'unité de régulation (41) présente un système à quatre articulations, ou forme un guidage avec au moins un logement de guidage (43) non linéaire s'étendant à la hauteur géodésique, ou un guidage avec deux logements de guidage linéaires non parallèles, un support de moteur (42) étant guidé de manière réglable sur les logements de guidage (43).

8. Véhicule nautique selon l'une quelconque des revendications 1 à 7,
**caractérisé**
**en ce que** les ailes portantes (21, 31) côté proue et/ou côté poupe font partie d'un agencement d'aile portante (20, 30) pénétrant ou non.

9. Véhicule nautique selon l'une quelconque des revendications 1 à 8,
**caractérisé**
**en ce que** les ailes portantes (21, 31) côté proue et/ou côté poupe sont couplées entre elles pour former un agencement d'aile portante traversant.

10. Véhicule nautique selon l'une quelconque des revendications 1 à 9,
**caractérisé**
**en ce qu'**un système de capteurs est associé à la coque de bateau (10), qui détermine la hauteur d'eau à proximité de la coque de bateau, en particulier dans le sens de la marche devant, sous et/ou derrière le véhicule nautique,
et/ou en ce que le système de capteurs comporte un capteur de charge qui détermine directement ou indirectement la force de portance agissant sur une ou plusieurs ailes (21/31),
et/ou en ce que le système de capteurs détermine la position et/ou l'accélération et/ou la vitesse d'au moins une partie de la coque de bateau (10) dans l'espace, et en ce que, en fonction d'au moins une valeur de mesure déterminée par le système de capteurs, une unité de commande commande le réglage en hauteur de l'agencement d'aile portante (20, 30) et/ou des ailes portantes (21, 31).

11. Véhicule nautique selon l'une quelconque des revendications 1 à 10,
**caractérisé**
**en ce qu'**au moins l'un des agencements d'aile portante (20, 30) ou au moins l'une des ailes portantes (21, 31) comporte une zone d'aile portante flexible (21.2), la zone d'aile portante (21.2) reliant deux composants, notamment des composants d'aile (21.1, 21.3) de l'agencement d'aile portante (20, 30) ou des ailes portantes (21, 31), ou formant au moins une extrémité de l'agencement d'aile portante (20, 30) ou de l'aile portante (21, 31),
et **en ce que** la zone d'aile portante flexible (21.2) est conçue pour provoquer, en cas de sollicitation dans une direction de sollicitation, un déplacement de l'agencement d'aile portante (20, 30) ou d'au moins une partie de l'aile portante (21, 31) dans une position de déplacement qui ne correspond pas à cette direction de sollicitation.

12. Véhicule nautique selon la revendication 11,
**caractérisé**
**en ce que** la zone d'aile (21.2) est réalisée sous la forme d'un élément à couches, les couches (21.4) étant formées par des matériaux fibreux,
et **en ce que** la direction principale des fibres des matériaux fibreux d'au moins deux couches voisines (21.4) diffère l'une de l'autre.

13. Véhicule nautique selon l'une des revendications 11 ou 12,
**caractérisé**
**en ce que** les zones d'aile (21.2) présentent une allure de section transversale non constante.

14. Véhicule nautique selon l'une quelconque des revendications 11 à 13,
**caractérisé**
**en ce que** la zone d'aile (21.2) comporte un composant central (21.5) sur lequel les couches (21.4) sont appliquées des deux côtés,
le composant central présentant un module d'élasticité différent de celui des couches (21.4).

15. Véhicule nautique selon l'une quelconque des revendications 11 à 14,
**caractérisé**
**en ce qu'**un actionneur réglable est associé à l'agencement d'aile portante (20, 30) ou aux ailes portantes (31, 32), lequel actionneur provoque une charge dans le sens de la charge lors du réglage.
